(19) **Europäisches Patentamt / European Patent Office / Office européen des brevets**

(11) **EP 3 656 533 B1**

(12) **EUROPEAN PATENT SPECIFICATION**

(45) Date of publication and mention
of the grant of the patent:
**07.06.2023 Bulletin 2023/23**

(21) Application number: **18835169.6**

(22) Date of filing: **18.07.2018**

(51) International Patent Classification (IPC):
**B29C 49/64** (2006.01)   **B29C 49/48** (2006.01)
**B65D 1/00** (2006.01)   **B29C 49/06** (2006.01)
**B65B 3/02** (2006.01)   **B65D 1/02** (2006.01)
**B29C 49/08** (2006.01)

(52) Cooperative Patent Classification (CPC):
**B29C 49/4823; B29C 49/06; B65B 3/022;
B65D 1/0207;** B29C 49/08; B29C 49/42808;
B29C 2049/023; B29C 2049/4825; B29C 2049/483;
B29C 2049/4848; B29C 2049/4892

(86) International application number:
**PCT/JP2018/026947**

(87) International publication number:
**WO 2019/017395 (24.01.2019 Gazette 2019/04)**

(54) **POLYESTER RESIN CONTAINER, METHOD FOR PRODUCING SAME, AND BLOW MOULD**

POLYESTERHARZBEHÄLTER, HERSTELLUNGSVERFAHREN DAFÜR UND BLASFORM

RÉCIPIENT EN RÉSINE DE POLYESTER, SON PROCÉDÉ DE PRODUCTION, ET MOULE DE SOUFFLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.07.2017 JP 2017141354**

(43) Date of publication of application:
**27.05.2020 Bulletin 2020/22**

(73) Proprietor: **Toyo Seikan Co., Ltd.
Tokyo 141-8640 (JP)**

(72) Inventors:
• **NAGAHARU, Rika**
  **Yokohama-shi**
  **Kanagawa 230-0001 (JP)**
• **OKABE, Koki**
  **Yokohama-shi**
  **Kanagawa 230-0001 (JP)**
• **KONDO, Hiroyuki**
  **Yokohama-shi**
  **Kanagawa 230-0001 (JP)**
• **ISHII, Ryota**
  **Yokohama-shi**
  **Kanagawa 230-0001 (JP)**

• **UCHIYAMA, Takeshi**
  **Yokohama-shi**
  **Kanagawa 230-0001 (JP)**
• **FUJIOKA, Masashi**
  **Yokohama-shi**
  **Kanagawa 230-0001 (JP)**
• **KOMIYA, Atsushi**
  **Yokohama-shi**
  **Kanagawa 230-0001 (JP)**

(74) Representative: **Piticco, Lorena
Isler & Pedrazzini AG
Giesshübelstrasse 45
Postfach 1772
8027 Zürich (CH)**

(56) References cited:
| | |
|---|---|
| JP-A- H0 811 195 | JP-A- H0 811 195 |
| JP-A- H07 314 547 | JP-A- H08 318 563 |
| JP-A- S59 207 218 | JP-A- S59 207 218 |
| JP-A- 2009 255 926 | JP-A- 2016 182 971 |
| JP-A- 2016 182 971 | JP-A- 2017 109 484 |
| JP-A- 2017 109 484 | US-A1- 2015 209 996 |

## Description

**Technical Field**

The present invention relates to a a blow mold and a method of fabrication whereby the blow mold is used.

**Background Art**

So far, a polyester-based resin container formed using a polyester-based resin such as polyethylene terephthalate to prepare a closed-end cylindrical pre-form by injection molding, compression molding or the like, and molding this pre-form into a bottle shape by biaxial stretch blow molding has been used as a container into which various beverages, various seasonings and the like are filled as a content liquid in the wide range of fields.

Then, when filling the container of this kind with the content liquid, the container is filled with a heat-pasteurized content liquid with keeping the heat-pasteurized content liquid at a high temperature (for example, about 85°C), also serving as pasteurization treatment of the container (hot filling), or the container subjected to sterilization treatment with a chemical is filled with the content liquid at ordinary temperature under an environment controlled under aseptic conditions (aseptic filling), or the like, whereby propagation of bacteria after filling is suppressed to secure safety.

Moreover, in the container of this kind, an attempt on molding the container with a wall as thin as possible has been made so far in order to achieve lightweight of the container or cost reduction by reduction of an amount of a resin to be used. If the aseptic filling is employed as a method of filling the content liquid, heat resistance as in the case of the hot filling is not required for the container, and therefore further lightweight and thickness reduction can be achieved. However, as the thickness reduction of the container progresses, rigidity of the container is reduced. Then, for example, after the container is filled with the content liquid and shipped, the containers are stacked upon transport or storage in many cases. If a load is applied thereto in an axial direction at the time, the container cannot withstand the load to cause buckling deformation, which is liable to significantly undermine a commodity value.

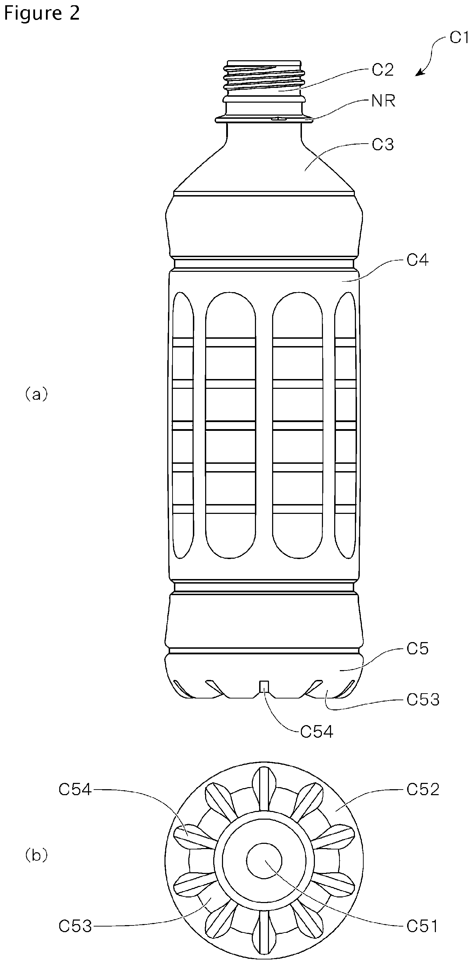

Therefore, for example, Patent Document 1 discloses a container provided with a bottom part having a bottom plate part positioned in a bottom-part center, and a periphery part positioned in a bottom-part periphery and having a grounding part formed, in which a plurality of groove parts dividing the grounding part are radially formed (see Fig. 2), wherein the container is provided with such a bottom part, whereby longitudinal compression strength to the load to be applied in the axial direction can be secured. Furthermore, from JP S59 207218 A, a method and mould for forming a biaxially oriented thermoplastic material are known, wherein a blank is placed in a blow mould in a first moulding stage and is then extended in its axial direction such that its length exceeds the axial length of the container to be formed. JP H08 11195 A teaches subjecting a preform to biaxially stretching by a one-step method to form a self-supporting structure and crystallizing a specific part while holding a part in a mould held at a specific temperature at the time of biaxially stretching to thermally fix the same. JP 2016 182971 A discloses a synthetic resin container having decompression absorption performance in the bottom, wherein the container is characterized in a leg part, a ground-contacting part, and an inner peripheral wall. A movable bottom is formed farther to the inside than the inner peripheral wall and curved parts and grooved parts are provided between the outer edge of the movable bottom and an inner edge in contact with a center part. From JP H08 318563 A it is known to arrange a shield plate having a slit to the bottom part of a biaxially stretched blow molded hollow container. By heating the bottom part of the hollow container from below through the slit, the bottom part of the hollow container is crystallized. Next, the shield plate is detached from the hollow container and the bottom part of a new hollow container is heated and crystallized in the same way. JP H07 314547 A discloses a blow moulding die comprising a blow die for a drum part, a blow die for a bottom part, and a mouth part core. A heating element is embedded in the blow die for the bottom part, wherein a blow container being defined by the dies and the core is heated by means of the heating element. US 2015/209996 A1 discloses a process for forming a blow moulded PET plastic container, wherein a conditioned preform is inserted into a blow mould having temperature zones along an axis of the mould, and wherein the preform is blown into a finished PET container by a stretch blow moulding process.

**Related Art Documents**

**Patent Documents**

Patent Document 1: JP-A-2009-255926

**Summary of the Invention**

**Problems to be Solved by the Invention**

Incidentally, when filling with a content liquid by means of aseptic filling, a container is subjected to sterilization treatment with a chemical, and then ordinarily through a rinsing step of washing away the chemical with hot water at about 60°C for about several seconds, and then the container is filled with the content liquid. In this case, if thickness reduction of the container progresses, the container cannot withstand such hot-water treatment, whereby the container is liable to be shrunk. Therefore, the container used for the aseptic filling is not required to have high heat resistance, but is required to have moderate heat resistance (rinsability) to a degree at which the container is not excessively shrunk by the hot-water treatment in the rinsing step. A temperature of a mold during blow molding is set to a comparatively higher level (for example, about 100°C), whereby even a further thinner-walled container can be provided with such rinsability.

However, if the blow molding is performed using the mold set to a comparatively higher temperature, a demolding defect is caused in several cases upon opening the mold following the blow molding. For example, a bottom-part center of the container molded by the blow molding is not sufficiently stretched, and an unstretched portion tends to remain. The unstretched portion is not subjected to molecular orientation, as compared with a stretched portion, and therefore is in a state in which a portion subjected to orientation crystallization is small. Accordingly, if the temperature of the mold is increased, the portion not subjected to molecular orientation is softened to be easily pasted to the mold, resulting in causing the demolding defect.

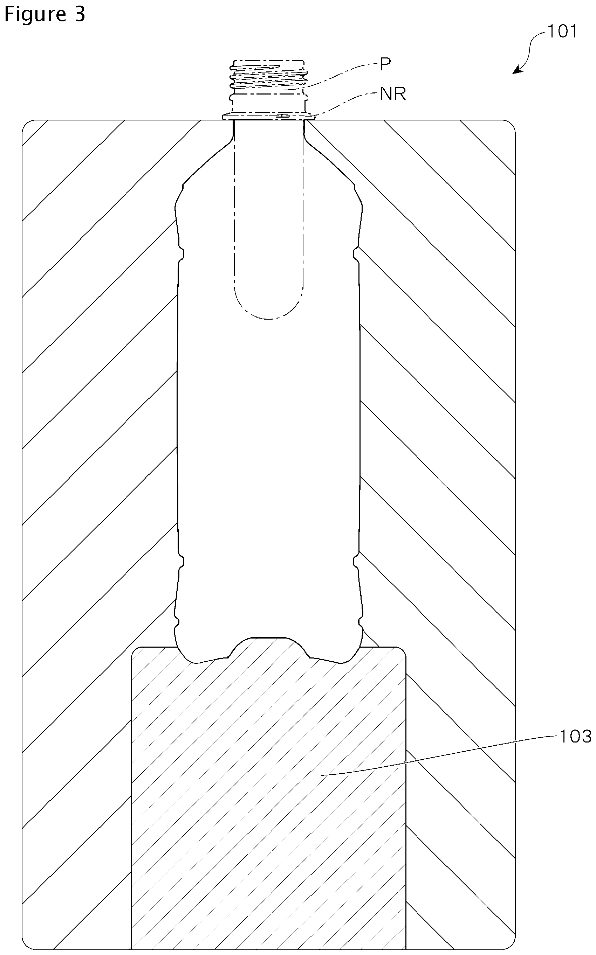

Meanwhile, for example, as shown in Fig. 3, a blow mold 101 for molding the container provided with the bottom part as disclosed and described in Patent Document 1 is, considering mold opening, formed into a structure provided with a bottom-part mold 103 for integrally shaping a bottom-part center and a bottom-part periphery. Therefore, if a set temperature of the bottom-part mold 103 is decreased in order to avoid the demolding defect, rinsability of the bottom-part periphery of a blow-molded container is damaged, whereby a problem is liable to be caused, in which a grounding part formed in the bottom-part periphery is shrunk by the hot-water treatment in the rinsing step to be unable to stand on its own.

The present invention has been made in view of the circumstances as described above, and an objective of the present invention is to provide a polyester-based resin container in which, in molding a closed-end cylindrical pre-form into a predetermined container shape provided with a bottom part having a bottom plate part positioned in a bottom-part center, and a periphery part positioned in a bottom-part periphery and having a grounding part formed, by biaxial stretch blow molding, by using a blow mold provided with a bottom-part mold for integrally shaping the bottom-part center and the bottom-part periphery, while preventing a demolding defect from occurring upon opening the mold following molding, heat resistance to hot-water treatment in a rinsing step when filling with a content liquid by means of aseptic filling is provided, and a method for producing the same, and a blow mold preferable for producing such a polyester-based resin container.

Means for Solving the Problems

A blow mold according to the present invention is structured, in which a blow mold which molds a closed-end cylindrical pre-form into a predetermined container shape provided with a bottom part having a bottom plate part positioned in a bottom-part center, and a periphery part positioned in a bottom-part periphery and having a grounding part formed, by biaxial stretch blow molding, comprising a side-part mold formed of a pair of split molds configured to be openable and closable, and a bottom-part mold to be incorporated into a bottom-part side of the side-part mold, wherein the bottom-part mold has a bottom-part center mold for shaping the bottom-part center including the bottom plate part, and a bottom-part periphery mold for shaping the bottom-part periphery including the periphery part, and has a temperature control mechanism for adjusting each of the bottom-part center mold and the bottom-part periphery mold to a predetermined temperature, wherein the bottom-part center mold and the bottom-part periphery mold formed as a separate body are combined with each other through a heat insulation material, and the resulting combined molds are bonded to a support inside which a temperature control medium passage through which a temperature control medium at a low temperature is circulated is formed, and simultaneously a heating element is wound around a peripheral surface of the bottom-part periphery mold, and while cooling the bottom-part center mold, the bottom-part periphery mold is heated, whereby each of the bottom-part center mold and the bottom-part periphery mold can be adjusted to a predetermined temperature.

Moreover, a method for producing a polyester-based resin container according to the present invention is structured, in which a method for producing a polyester-based resin container using the blow mold, wherein, when the pre-form set in the blow mold undergoes biaxial stretch blow molding, while cooling the bottom-part center mold, the bottom-part periphery mold is heated to selectively heat-set the bottom-part periphery including the periphery.

Moreover, a polyester-based resin container according to the disclosure relates to a polyester-based resin container wherein a degree of crystallinity of the bottom-part center including the bottom plate part is in the range of 1 to 5%, and a degree of crystallinity of the bottom-part periphery including the periphery part is in the range of 10 to 35%.

Advantageous Effects of the Invention

According to the present invention, while suppressing pasting of a bottom-part center including a bottom plate part to a bottom-part center mold to prevent a demolding defect from occurring upon opening a mold following molding, heat resistance to hot-water treatment in a rinsing step when filling with a content liquid by means of aseptic filling can be provided.

Brief Description of the Drawings

Fig. 1 is a cross-sectional view schematically showing a blow mold according to an embodiment of the present invention.

Fig. 2 is an explanatory diagram showing one example of a container produced by a method for producing a polyester-based resin container according to the embodiment of the present invention, in which Fig. 2(a) shows a front view, and Fig. 2(b) shows a bottom view.

Fig. 3 is an explanatory diagram showing a conventional example.

Mode for Carrying out the Invention

Hereinafter, a preferred embodiment of the present invention will be described with reference to drawings.

[Blow mold]

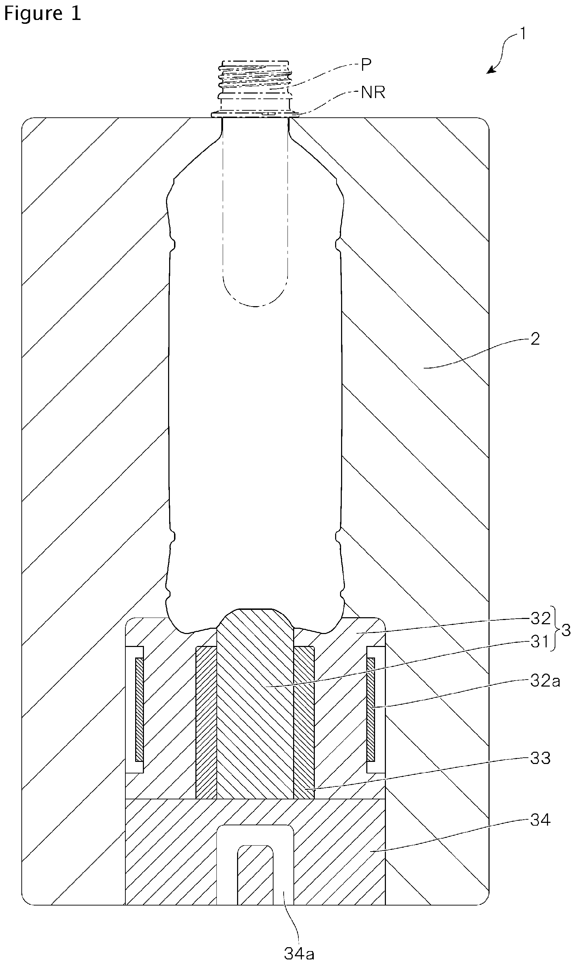

As one embodiment of a blow mold according to the present invention, an outline thereof is shown in Fig. 1.

A blow mold 1 shown in Fig. 1 is a mold for molding a closed-end cylindrical pre-form P into a predetermined container shape by biaxial stretch blow molding, which is provided with a side-part mold 2 formed of a pair of split molds configured to be openable and closable, and a bottom-part mold 3 to be incorporated into a bottom-part side of the side-part mold 2. Such a blow mold 1 is ordinarily formed using stainless steel, aluminum alloy or the like.

It should be noted that Fig. 1 is a cross-sectional view showing a cross section obtained by cutting the blow mold 1 taken along a surface including a parting surface of the side-part mold 2, in which the pre-form P set in the blow mold 1 is shown by a dashed dotted line. The same description applies also to Fig. 3 showing a conventional example.

Moreover, the blow mold 1 applies a container C1 shown in Fig. 2 as a molding target, in which such a container C1 is provided with a bottom part C5 having a bottom plate part C51 positioned in a bottom-part center, and a periphery part C52 positioned in a bottom-part periphery and having a grounding part C53 formed, in which a plurality of groove parts C54 dividing the grounding part C53 are radially formed.

When the blow mold 1 is closed, a cavity corresponding to a container shape of the container C1 is formed within the mold. Then, the blow mold 1 is configured in such a manner that the bottom part C5 is shaped by the bottom-part mold 3 having a bottom-part center mold 31 for shaping the bottom-part center including the bottom plate part C51, and a bottom-part periphery mold 32 for shaping the bottom-part periphery including the periphery part C52, and a shoulder part C3 and a barrel part C4 are shaped by the side-part mold 2.

Moreover, the bottom-part mold 3 for shaping the bottom part C5 has a temperature control mechanism for adjusting each of the bottom-part center mold 31 and the bottom-part periphery mold 32 to a predetermined temperature. Specific configuration of such a temperature control mechanism is not particularly limited.

In the present embodiment, the bottom-part center mold 31 and the bottom-part periphery mold 32 are formed as a separate body, and these molds are combined with each other through a heat insulation material 33, and the resulting combined molds are bonded to a support 34 inside which a temperature control medium passage 34a through which a temperature control medium at a low temperature (for example, cooling water) is circulated is formed. Then, a heating element 32a such as a band heater is wound around a peripheral surface of the bottom-part periphery mold 32.

Thus, while cooling the bottom-part center mold 31, the bottom-part periphery mold 32 is heated to adjust each of the bottom-part center mold 31 and the bottom-part periphery mold 32 to a predetermined temperature, whereby a temperature distribution of the bottom-part mold 3 can be preferably controlled.

It should be noted that, if no difficulty exists in routing the temperature control medium passage for circulating the temperature control medium, the temperature control medium passage may be formed inside each of the bottom-part center mold 31 and the bottom-part periphery mold 32 formed as the separate body to configure the temperature control mechanism for adjusting each of the bottom-part center mold 31 and the bottom-part periphery mold 32 to a predetermined temperature. Moreover, although not particularly shown, the temperature control medium passage may be formed inside the side-part mold 2 to adjust the side-part mold 2 to a predetermined temperature.

[Method for producing polyester-based resin container]

The method for producing the polyester-based resin container according to the present invention can be performed using the blow mold 1 as described above, and one embodiment thereof will be described.

In the present embodiment, first, the pre-form P heated and softened into a blow-moldable state is supported to the side-part mold 2 to close the blow mold 1, whereby the pre-form P is set in the blow mold 1 (see Fig. 1).

The pre-form P is molded into a closed-end cylindrical shape in which one end side is opened by injection molding, compression molding or the like by using a polyester-based resin as a material resin, and a portion in the vicinity of an opening part thereof is molded into become a mouth part C2 of the container C1 as it is. Specific examples of the material resin include thermoplastic polyester such as polyethylene terephthalate, polybutylene terephthalate, polyethylene naphthalate, polylactic acid or a copolymer thereof, and a resin prepared by blending these resins or these resins with other resins; in particularly ethylene terephthalate-based thermoplastic polyester such as polyethylene terephthalate is preferable, but the material resin is not limited thereto.

In the pre-form P set in the blow mold 1, a part on a side lower than a neck ring NR is stretched in an axial direction (height direction) by a stretching rod (not shown), while also is stretched in an axial direction and a circumferential direction (crosswise direction) by high-pressure fluid blowing. At this time, a cavity shape of the blow mold 1 is transferred to the stretched part. Thus, as shown in Fig. 2, the pre-form P is molded into a predetermined shape provided with the mouth part C2, the shoulder part C3, the barrel part C4, and the bottom part C5 having the bottom plate part C51 positioned in the bottom-part center, and the periphery part C52 positioned in the bottom-part periphery and having the grounding part C53 formed, in which the plurality of groove parts C54 dividing the grounding part C53 are radially formed.

When the pre-form P thus undergoes the biaxial stretch blow molding, in the present embodiment, as described above, while cooling the bottom-part center mold 31, the bottom-part periphery mold 32 is heated to selectively heat-set the bottom-part periphery including the periphery part C52. At this time, each of temperatures of the bottom-part center mold 31 and the bottom-part periphery mold 32 is controlled under preferred conditions so that, while the bottom-part center mold 31 is preferably cooled to be lower than a glass transition temperature of the polyester-based resin used as the material resin, the bottom-part periphery mold 32 may be preferably heated to be equal to or higher than the glass transition temperature of the polyester-based resin used as the material resin, and equal to or lower than 160°C.

More specifically, in the container C1 produced by performing the biaxial stretch blow molding of the pre-form P as described above, each of the temperatures of the bottom-part center mold 31 and the bottom-part periphery mold 32 is adjusted so that a degree of crystallinity of the bottom-part center including the bottom plate part C51 may be in the range of 1 to 5%, and a degree of crystallinity of the bottom part periphery including the periphery part C52 may be in the range of 10 to 35%.

Here, the degree of crystallinity X [%] can be calculated by cutting out a test piece from a part to be measured, and measuring density $\rho$ (g/cm$^3$) of the test piece by a density gradient tube method, and using the following expression based on densimetry.

$$X = (\rho c(\rho - \rho a)) / (\rho(\rho c - \rho a))$$

$\rho a$: Amorphous density (g/cm$^3$)
$\rho c$: Crystal density (g/cm$^3$)

It should be noted that, when polyethylene terephthalate is used as the material resin, the degree of crystallinity X [%] can be calculated by taking: $\rho c$ = 1.455 (g/cm$^3$) and $\rho a$ = 1.335 (g/cm$^3$).

Thus, according to the present embodiment, in producing the container C1 provided with the bottom part C5 having the bottom plate part C51 positioned in the bottom-part center, and the periphery part C52 positioned in the bottom-part periphery and having the grounding part C53 formed, in which the plurality of groove parts C54 dividing the grounding part C53 are radially formed, by the biaxial stretch blow molding, the bottom-part center mold 31 is cooled to suppress pasting of the bottom-part center including the bottom plate part C51 to the bottom-part center mold 31, whereby the demolding defect can be prevented from occurring upon opening the mold following blow molding. Meanwhile, the bottom-part periphery including the periphery part C52 is selectively heat-set to increase the degree of crystallinity by thermal crystallization. Thus, hot-water treatment in the rinsing step when filling the container C1 with the content liquid by means of aseptic filling can provide moderate heat resistance (rinsability) to a degree at which the grounding part C53 formed in the periphery part C52 is prevented from being shrunk to be unable to stand on its own.

As described above, the present invention is described with reference to the preferred embodiments, but the present invention is not limited only to the embodiments described above, and the present invention can be obviously practiced with various modifications within the scope of the present invention.

For example, in the embodiment described above, the container C1 provided with the bottom part C5 having the bottom plate part C51 positioned in the bottom-part center, and the periphery part C52 positioned in the bottom-part periphery and having the grounding portion C53 formed, in which the plurality of groove parts C54 dividing the grounding part C53 are radially formed is applied as the molding target, but the present invention is not limited thereto.

The present invention is a technology useful when the mold is designed in such a manner that the bottom-part center including the bottom plate part C51, and the bottom-part periphery including the periphery part C52 are integrally shaped by the bottom-part mold 3 from a relation with mold opening or the like. Therefore, the grounding part C53 formed in the periphery part C52 needs not be divided by the plurality of radially formed groove parts, and specific forms of parts excluding the bottom part 5 of the container C1 are not particularly limited.

[Explanation of numerical symbols]

1 Blow mold
2 Side-part mold
3 Bottom-part mold
31 Bottom-part center mold

32 Bottom-part periphery mold
32a Heating element
33 Heat insulation material
34 Support
34a Temperature control medium passage
C1 Container
C5 Bottom part
C51 Bottom plate part
C52 Periphery part
C53 Grounding part
C54 Groove part

**Claims**

1. A blow mold (1) which molds a closed-end cylindrical pre-form (P) into a predetermined container shape provided with a bottom part (C5) having a bottom plate part (C51) positioned in a bottom-part center, and a periphery part (C52) positioned in a bottom-part periphery and having a grounding part (C53) formed, by biaxial stretch blow molding, comprising:

    a side-part mold (2) formed of a pair of split molds configured to be openable and closable, and
    a bottom-part mold (3) to be incorporated into a bottom-part side of the side-part mold (2),
    wherein the bottom-part mold (3) has a bottom-part center mold (31) for shaping the bottom-part center including the bottom plate part (C51), and a bottom-part periphery mold (32) for shaping the bottom-part periphery including the periphery part (C52), and has a temperature control mechanism for adjusting each of the bottom-part center mold (31) and the bottom-part periphery mold (32) to a predetermined temperature,
    whereby
    the bottom-part center mold (31) and the bottom-part periphery mold (32) formed as a separate body are combined with each other through a heat insulation material (33), and **characterized in that** the resulting combined molds are bonded to a support (34) inside which a temperature control medium passage (34a) through which a temperature control medium at a low temperature is circulated is formed, and simultaneously a heating element (32a) is wound around a peripheral surface of the bottom-part periphery mold (32), and
    while cooling the bottom-part center mold (31), the bottom-part periphery mold (32) is heated, whereby each of the bottom-part center mold (31) and the bottom-part periphery mold (32) can be adjusted to a predetermined temperature.

2. The blow mold according to claim 1, wherein the grounding part (C53) is divided by a plurality of radially formed groove parts (54).

3. A method for producing a polyester-based resin container using the blow mold according to claim 1 or 2, wherein,

    when the pre-form (P) set in the blow mold (1) undergoes biaxial stretch blow molding,
    while cooling the bottom-part center mold (31), the bottom-part periphery mold (32) is heated to selectively heat-set the bottom-part periphery including the periphery part (C52).

4. The method for producing the polyester-based resin container according to claim 3, wherein a temperature of the bottom-part center mold (31) is adjusted to be lower than a glass transition temperature of the polyester-based resin used as a material resin.

5. The method for producing the polyester-based resin container according to claim 3 or 4, wherein a temperature of the bottom-part periphery mold (32) is adjusted to be equal to or higher than the glass transition temperature of the polyester-based resin used as the material resin, and equal to or lower than 160°C.

6. The method for producing the polyester-based resin container according to any one of claims 3 to 5, wherein
each temperature of the bottom-part center mold (31) and the bottom-part periphery mold (32) is adjusted so that a degree of crystallinity of the bottom-part center including the bottom plate part is in the range of 1 to 5%, and a degree of crystallinity of the bottom-part periphery including the periphery part is in the range of 10 to 35%.

**Patentansprüche**

1. Blasform (1), die eine zylindrische Vorform (P) mit geschlossenem Ende zu einer vorbestimmten Behälterform formt, die mit einem Bodenteil (C5) versehen ist, der einen Bodenplattenteil (C51), der in einer Bodenteilmitte positioniert ist, und einen Umfangsteil (C52) aufweist, der in einem Bodenteilumfang positioniert ist und einen Erdungsteil (C53) aufweist, die durch biaxiales Streckblasformen gebildet ist, umfassend:

    eine Seitenteilform (2), die aus einem Paar geteilter Formen besteht, die derart ausgebildet sind, dass sie geöffnet und geschlossen werden können, und
    eine Bodenteilform (3), die in eine Bodenteilseite der Seitenteilform (2) eingebaut wird,

wobei die Bodenteilform (3) eine Bodenteil-Mittelform (31) zum Formen der Bodenteilmitte einschliesslich des Bodenplattenteils (C51) und eine Bodenteil-Umfangsform (32) zum Formen des Bodenteilumfangs einschliesslich des Umfangsteils (C52) aufweist und einen Temperatursteuerungsmechanismus zum Einstellen sowohl der Bodenteil-Mittelform (31) als auch der Bodenteil-Umfangsform (32) auf eine vorbestimmte Temperatur hat,

wodurch die Bodenteil-Mittelform (31) und die Bodenteil-Umfangsform (32), die als ein separater Körper ausgebildet sind, durch ein Wärmeisolationsmaterial (33) miteinander kombiniert sind, und

**dadurch gekennzeichnet, dass** die sich ergebenden kombinierten Formen mit einem Träger (34) verbunden sind, in dessen Innerem ein Temperatursteuerungsmediumdurchgang (34a) ausgebildet ist, durch den ein Temperatursteuerungsmedium mit niedriger Temperatur zirkuliert, und gleichzeitig ein Heizelement (32a) um eine Umfangsfläche der Bodenteil-Umfangsform (32) gewickelt ist, und

während die Bodenteil-Mittelform (31) gekühlt wird, die Bodenteil-Umfangsform (32) erwärmt wird, wobei sowohl die Bodenteil-Mittelform (31) als auch die Bodenteil-Umfangsform (32) auf eine vorbestimmte Temperatur eingestellt werden können.

2. Blasform nach Anspruch 1, wobei das Erdungsteil (C53) durch eine Vielzahl von radial geformten Rillenteilen (54) unterteilt ist.

3. Verfahren zur Herstellung eines Behälters aus Harz auf Polyesterbasis unter Verwendung der Blasform nach Anspruch 1 oder 2, wobei,

wenn die in die Blasform (1) eingesetzte Vorform (P) einem biaxialen Streckblasverfahren unterzogen wird,

während die Bodenteil-Mittelform (31) gekühlt wird, die Bodenteil-Umfangsform (32) erwärmt wird, um den Bodenteilumfang einschliesslich des Umfangsteils (C52) selektiv wärmeauszuhärten.

4. Verfahren zur Herstellung des Behälters aus Harz auf Polyesterbasis nach Anspruch 3, bei dem die Temperatur der Bodenteil-Mittelform (31) derart eingestellt wird, dass sie niedriger ist als die Glasübergangstemperatur des Harzes auf Polyesterbasis, das als Materialharz verwendet wird.

5. Verfahren zur Herstellung des Behälters aus Harz auf Polyesterbasis nach Anspruch 3 oder 4, wobei die Temperatur der Bodenteil-Umfangsform (32) derart eingestellt wird, dass sie gleich oder höher als die Glasübergangstemperatur des als Materialharz verwendeten Harzes auf Polyesterbasis und gleich oder niedriger als 160 °C ist.

6. Verfahren zur Herstellung des Behälters aus Harz auf Polyesterbasis nach einem der Ansprüche 3 bis 5, wobei jede Temperatur der Bodenteil-Mittelform (31) und der Bodenteil-Umfangsform (32) derart eingestellt wird, dass ein Kristallinitätsgrad der Bodenteilmitte einschliesslich des Bodenplattenteils im Bereich von 1 bis 5 % liegt und ein Kristallinitätsgrad des Bodenteilumfangs einschliesslich des Umfangsteils im Bereich von 10 bis 35 % liegt.

## Revendications

1. Un moule de soufflage (1) qui moule une préforme cylindrique (P) à extrémité fermée en une forme de récipient prédéterminée pourvue d'une partie inférieure (C5) ayant une partie de plaque inférieure (C51) positionnée dans un centre de partie inférieure, et une partie périphérique (C52) positionnée dans une périphérie de partie inférieure et ayant une partie de repos (C53) formée, par étirage-soufflage biaxial, comprenant :

un moule de partie latérale (2) formé d'une paire de moules divisés configurés pour pouvoir être ouverts et fermés, et
un moule de partie inférieure (3) pouvant être incorporé dans une partie inférieure du moule de partie latérale (2),
dans lequel le moule de partie inférieure (3) comprend un moule central de partie inférieure (31) pour façonner le centre de partie inférieure comprenant la partie de plaque inférieure (C51), et un moule périphérique de partie inférieure (32) pour façonner la périphérie de partie inférieure comprenant la partie périphérique (C52), et a un mécanisme régulateur de température pour ajuster chacun du moule central de partie inférieure (31) et du moule périphérique de partie inférieure (32) à une température prédéterminée,
dans lequel le moule central de partie inférieure (31) et le moule périphérique de partie inférieure (32) façonnés en corps séparés sont combinés l'un à l'autre à travers un matériau d'isolation thermique (33), **caractérisé en ce que**
les moules combinés résultants sont reliés à un support (34) à l'intérieur duquel un passage de fluide de régulation de température (34a) est formé, à travers lequel un fluide de régulation de température à basse température est mis en circulation, et simultanément
un élément chauffant (32a) est enroulé autour d'une surface périphérique du moule périphérique de partie inférieure (32), et

tout en refroidissant le moule central de partie inférieure (31), le moule périphérique de partie inférieure (32) est chauffé, grâce à quoi chacun du moule central de partie inférieure (31) et du moule périphérique de partie inférieure (32) peut être ajusté à une température prédéterminée.

2. Le moule de soufflage selon la revendication 1, dans lequel la partie de repos (C53) est divisée par une pluralité de parties de rainure formées radialement (54).

3. Un procédé de production d'un récipient en résine à base de polyester utilisant le moule de soufflage selon la revendication 1 ou 2, dans lequel,

lorsque la préforme (P) placée dans le moule de soufflage (1) subit un moulage par étirage-soufflage biaxial,

tout en refroidissant le moule central de partie inférieure (31), le moule de périphérie de partie inférieure (32) est chauffé pour thermofixer sélectivement la périphérie de partie inférieure comprenant la partie périphérique (C52).

4. Le procédé de production d'un récipient en résine à base de polyester selon la revendication 3, dans lequel une température du moule central de partie inférieure (31) est ajustée pour être inférieure à une température de transition vitreuse de la résine à base de polyester utilisée comme matériel de résine.

5. Le procédé de production d'un récipient en résine à base de polyester selon la revendication 3 ou 4, dans lequel une température du moule périphérique de partie inférieure (32) est ajustée pour être égale ou supérieure à la température de transition vitreuse de la résine à base de polyester utilisée comme matériel de résine, et égale ou inférieure à 160°C.

6. Le procédé de production d'un récipient en résine à base de polyester selon l'une quelconque des revendications 3 à 5, dans lequel chaque température du moule central de partie inférieure (31) et du moule périphérique de partie inférieure (32) est ajustée de sorte à ce que le degré de cristallinité du centre de partie inférieure, y compris la partie de plaque inférieure, est dans la plage de 1 à 5 %, et un degré de cristallinité de la périphérie de partie inférieure, y compris la partie périphérique, est dans la plage de 10 à 35 %.

Figure 1

## Figure 2

(a)

C1

C2

NR

C3

C4

C5

C53

C54

(b)

C54

C52

C53

C51

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S59207218 A
- JP H0811195 A
- JP 2016182971 A
- JP H08318563 A
- JP H07314547 A
- US 2015209996 A1
- JP 2009255926 A